# EUROPEAN PATENT SPECIFICATION

(11) **EP 3 990 402 B1**
(45) Date of publication and mention of the grant of the patent: **25.09.2024**
(21) Application number: 20830839.5
(22) Date of filing: 29.06.2020
(51) Int. Cl.: C02F 9/00, B01D 36/02, B01D 61/14, B01D 61/20, C02F 1/00, C02F 1/44, C01B 32/182, C02F 103/00, C02F 103/06, C02F 1/28, C02F 103/10, C02F 101/30, C02F 101/34, C02F 101/22, C02F 101/10, C02F 101/16, C02F 101/32, C02F 101/20

(54) **SYSTEMS COMPRISING GRAPHENE BASED FILTERS**
SYSTEME MIT FILTER AUF GRAPHENBASIS
SYSTÈMES COMPRENANT DES FILTRES À BASE DE GRAPHÈNE

(30) Priority: 28.06.2019 US 201962868217 P
(43) Date of publication of application: 04.05.2022
(73) Proprietor: Grafoid Inc., Kingston, Ontario K7L 0E9 (CA)
(72) Inventor: SHANNON, Michael, Edward, Ottawa, Ontario K0K 2T0 (CA); ZHOU, Yang, Richmond Hill, Ontario L4C 9X1 (CA); RUNTÉ, Cameron, S., Kingston, Ontario K7P 2V1 (CA); MANGA, Kiran Kumar, Jurong 640634 (SG); BALAPANURU, Janardhan, Bukit Panjang 672636 (SG)
(74) Representative: Kolster Oy Ab
(86) International application number: PCT/CA2020/050906
(87) International publication number: WO 2020/257950

(56) References cited:
- WO-A1-2018/122871
- CN-A- 103 553 233
- CN-A- 104 194 007
- CN-A- 104 230 069
- CN-A- 104 230 069
- CN-A- 108 658 293
- US-A1- 2011 114 573
- US-A1- 2011 114 573
- SHABNAM SHESHMANI ET AL: "Preparation of graphene oxide/chitosan/FeOOH nanocomposite for the ofPb(II) from aqueous solution", INTERNATIONAL JOURNAL OF BIOLOGICAL MACROMOLECULES, vol. 80, 15 July 2015 (2015-07-15), pages 475 - 480, XP055776710
- ZHANG, X. ET AL.: "Polyethersulfone enwrapped graphene oxide porous particles for water treatment", CHEMICAL ENGINEERING JOURNAL, vol. 215, no. 216, 2013, pages 72 - 81, XP055598355, ISSN: 1385-8947, DOI: 10.1016/j.cej.2012.11.009
- SHABNAM SHESHMANI, MEHRNAZ AKHUNDI NEMATZADEH, SOHEILA SHOKROLLAHZADEH, ALIREZA ASHORI: "Preparation of graphene oxide/chitosan/FeOOH nanocomposite for the ofPb(II) from aqueous solution", INTERNATIONAL JOURNAL OF BIOLOGICAL MACROMOLECULES, vol. 80, 2015, pages 475 - 480, XP055776710, ISSN: 0141-8130
- MUKHERJEE SRITAMA, KUMAR AVULA ANIL, SUDHAKAR CHENNU, KUMAR RAMESH, AHUJA TRIPTI, MONDAL BISWAJIT, SRIKRISHNARKA PILLALAMARRI, PHI: "Sustainable and Affordable Composites Built Using Microstructures Performing Better than Nanostructures for Arsenic Removal", A CS SUSTAINABLE CHEMISTRY & ENGINEERING, vol. 7, no. 3, 10 December 2018 (2018-12-10), pages 3222 - 3233, XP055776712, DOI: 10.1021/acssuschemeng.8b05157

## Description

### FIELD OF THE INVENTION

The present invention pertains to the field of water filtration and in particular to filter systems for remediation of contaminated water sources to provide water suitable for human consumption.

### BACKGROUND

The increasing demand for clean drinking water, rising scarcity of water resources, and rapid industrialization represent real-world factors that necessitate the need for scalable water treatment solutions.

Conventional filtering materials (*e.g*., activated carbon, zeolites, flocculants, etc.) have limitations such as pH sensitivity, poor efficiency and recoverability that limit their usefulness with respect to the treatment of the wide variety of contaminants that may be found in wastewater and contaminated water sources.

Although there are several products available on the market that target point-of-use generation of drinking water from contaminated water sources, these are typically designed for personal use or for small volumes of water. These types of filters typically focus on using simple ultrafiltration without a carbon-based filter for adsorption of chemical contaminants.

There are also larger systems available for remediation of contaminated water sources, such as the Liquinex Compact Water Purification Systems, AMPAC systems, and Icon LifeSaver systems, however, none of these prior art systems are able to efficiently remove dissolved chemical contaminants, which are often present in groundwater or natural flowing water sources, while also being adaptable to a region's specific microbiological concerns.

Therefore there is a need for a lightweight, portable, modular device adaptable to the needs of the user that can be used to generate clean drinking water from any salt-free water source, regardless of the potential range of pathogens and dissolved chemicals that may exist in the water before filtration.

This background information is provided to reveal information believed by the applicant to be of possible relevance to the present invention. Some relevant documents are CN 104 230 069 A, US 2011/114573 A1, CN 108 658 293 A.

### SUMMARY OF THE INVENTION

An object of the present invention is to provide a graphene based filters and systems comprising same. In accordance with an aspect of the present invention, there is provided a multi-stage filter system for remediation of water from a contaminated water source to provide a purified water product, the system comprising: a first filter stage configured to remove coarse solid contaminants, the first filter stage comprising an intake port for placement into the contaminated water source, at least one strainer element, and a pump configured to draw water from the contaminated water source into the intake port and through the at least one strainer element to provide a first filtrate; a second filter stage configured to remove contaminants larger than about 20 nm to about 40 nm to provide a second filtrate, the second filter stage comprising a filter element having a maximum average pore opening diameter of about 20 nm to about 40 nm; a third filter stage configured to remove dissolved chemical contaminants from the second filtrate to provide a third filtrate, the third filter stage comprising at least one graphene-based filter containing at least one graphene-based material; a fourth filter stage configured to remove residual nanoparticle contaminants from the third filtrate to provide the purified water product; and an outflow structure configured to convey the purified water product from the fourth filter stage for output from the system.

### BRIEF DESCRIPTION OF THE FIGURES

In the followings, the term "graphene based filter cartridge in accordance with (one embodiment of) the invention" refers to the system according to the invention, comprising said graphene based filter cartridge.
Figure 1 is a schematic depiction of a filter system in accordance with one embodiment of the present invention.
Figure 2 is a schematic depiction of a filter system in accordance with one embodiment of the present invention.
Figure 3 is a perspective rear view of a portable filter system in accordance with one embodiment of the present invention.
Figure 4 is a perspective front view of a portable filter system in accordance with one embodiment of the present invention.
Figure 5 is a perspective view of the interior of a portable filter system in accordance with one embodiment of the present invention, showing details of the lower compartment.
Figure 6 is a perspective view of the interior of a portable filter system in accordance with one embodiment of the present invention, showing details of the upper compartment.
Figures 7A and 7B depict the results of performance tests of a graphene based filter cartridge in accordance with one embodiment of the present invention in comparison with a granular activated carbon filter of the prior art.
Figures 8A and 8B depict the results of performance tests of a graphene based filter cartridge in accordance with one embodiment of the present invention in comparison with a granular activated carbon filter of the prior art.
Figure 9 depicts the results of capacity tests of a graphene based filter cartridge in accordance with one embodiment of the present invention.
Figure 10 depicts the results of tests measuring the COD of water samples before and after undergoing filtration using a graphene based filter cartridge in accordance with one embodiment of the present invention.
Figures 11A and 11B depict the results of performance tests of a graphene based filter cartridge in accordance with one embodiment of the present invention in comparison with a granular activated carbon filter of the prior art.
Figure 12 is a schematic depiction of the components of a stage 3 filter in accordance with one embodiment of the present invention.
Figures 13A and 13B are photographic images of agar plates of bacterial growth assays of water samples before and after undergoing filtration using a stage 2 (S2) filter cartridge in accordance with one embodiment of the present invention.

### DETAILED DESCRIPTION OF THE INVENTION

The term "graphene-based material" is used to describe a material including graphene, graphene oxide and graphene derivatives. Examples of graphene-based materials suitable for use in the present invention include single layer graphene, few-layer graphene, graphene nano-platelets, fully oxidized single layer graphene oxide, partially oxidized few-layer graphene oxide, surface modified cationic graphene oxide, nitrogen doped graphene oxide, porous graphene oxide and other functionalized graphenes.

The term "graphene-based filter" is used to describe a filter containing at least one graphene-based material.

As used herein, the term "about" refers to a +/-10% variation from the nominal value. It is to be understood that such a variation is always included in a given value provided herein, whether or not it is specifically referred to.

Unless defined otherwise, all technical and scientific terms used herein have the same meaning as commonly understood by one of ordinary skill in the art to which this invention belongs.

The present invention provides a multi-stage filter/water purification system for remediation of water from a contaminated water source to provide a purified water product, wherein each stage is configured to remove a particular size or type of contaminant from the water passing through.

The system of the present invention is particularly useful for remediating water obtained from contaminated water sources including, but not limited to, contaminated groundwater, industrial wastewater, mine tailings, natural flowing fresh water, lake water, pond water, rain water runoff, any source of fresh water with unknown potential dissolved or dispersed contaminants, and municipal drinking water sources containing contaminants derived from underground piping systems or chlorinated hydrocarbons such as trihalomethane.

According to the invention, the system comprises at least four filter stages, wherein each stage is configured to remove a specific type or size of contaminant.

Due to the modular nature of the present system, the filters of the different stages can be independently removed, regenerated and replaced as required to ensure optimum performance of the filter system.

The modular nature also allows for the customization of filter combinations according to the remediation requirements of the contaminated water source.

The first filter stage is preferably configured to remove coarse solid contaminants larger than about 0.1 mm. In one embodiment, the first filter stage comprises one or more strainer elements, each strainer in sequence provided to remove successively smaller particles. In one embodiment, the first filter stage comprises a strainer element having an average opening diameter of from about 0.1 mm to about 1 mm. The first filter stage also comprises an intake port for placement into the contaminated water source, and a pump configured to draw water from the contaminated water source into the intake port and through the strainer element to provide a first filtrate which has had the coarse solid contaminants removed.

The second filter stage comprises a filter element having an average pore opening diameter of from about 20 nm to 40 nm. In another embodiment, the second filter stage is configured to remove contaminants larger than 20 nm, and comprises a filter element having an average pore opening diameter of from about 10 nm to 20 nm. The second filter stage is provided to mechanically remove microorganisms such as bacteria, fungi, parasites, cysts, viruses, as well as colloidal microparticles.

The third filter stage is configured to remove dissolved chemical contaminants from the second filtrate to provide a third filtrate. According to the invention, the third filter stage comprises at least one graphene-based filter material. In one embodiment, the graphene-based filter material comprises graphene and/or graphene oxide. In a preferred embodiment, the graphene is few layer graphene, and the graphene oxide is few layer graphene oxide. In one embodiment, the third filter stage comprises two or more filter cartridges, wherein the cartridges may be different or the same.

The fourth filter stage is configured to remove any nanoparticle contaminants from the third filtrate to provide the final purified water product. In one embodiment, the fourth filter stage comprises a filter membrane having an average pore opening diameter of from about 8 nm to about 20 nm. The fourth filter stage is provided to mechanically remove any particles that are too small to be captured by the previous filter stages, including for example, small viruses or greater than 20 nanometer-scale sized particles.

The purification system also comprises an outflow structure configured to convey the purified water product from the fourth filter stage for output from the system and use. In a preferred embodiment, the outflow structure is a hose.

According to the invention, all components of the system are provided in a single portable housing to facilitate transportation of the filter system to a suitable location near the contaminated water source. The compact size of the system within its housing makes it particularly suitable for use in remote or difficult to access locations. In one embodiment, the filter system is provided as a compact filtration suitcase.

In one embodiment, the system further comprises a power source. In one embodiment, the power source is located within the system housing. In one embodiment, the power source is located external to the system housing. In one embodiment, the power source can be packaged into a separate box that connects to the filtration system. In one embodiment, the power source is provided as one or more rechargeable or single use batteries. Where rechargeable batteries are used, the batteries can be recharged via a built-in renewable power source such as a solar panel, or via connection to a power grid, generator, portable wind turbine, or manually-driven power mechanism.

In one embodiment, the power source is an external solar panel. In one embodiment, the power source is provided by a plug-in connection to an external power source such as a generator or a power grid.

In accordance with the present invention, each of the first filter stage, the second filter stage, the third filter stage and the fourth filter stage are independently replaceable.

In accordance with one embodiment, the filter system employs an operating system configured to monitor one or more of power consumption, flow rate, and location using a GPS based locator. In one embodiment, the operating system is configured to trigger an automatic backwash cleaning process of the second and/or fourth filter stages based on system usage levels.

In one embodiment, the filter system is configured to process contaminated water at a rate of 100-1000 litres per hour, or 2400-24000 litres per day (LPD) at 24-hour operation.

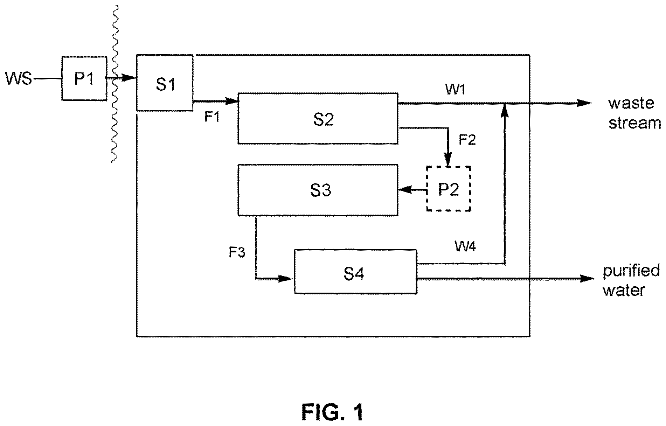

An exemplary embodiment of a filter system of the present invention is schematically depicted in Figure 1. As shown, contaminated water (CW) is drawn from a contaminated water source (WS) by pump P1 and is passed through a first filter stage **S1** to remove coarse solid contaminants, and to provide a first filtrate **F1.** First filtrate **F1** is passed through second filter stage **S2,** optionally impelled by pump **P2,** to remove fine particulates to provide a second filtrate **F2** and optionally a waste stream **W1** containing unfiltered water that has not passed through the filter element(s) of second filter stage **S2.** Second filtrate **F2** is passed through third filter stage **S3,** which absorbs chemical contaminants to provide third filtrate **F3.** Third filtrate **F3** is passed through fourth filter stage **S4** to remove nanoparticulates, thus providing the final purified water product and optionally a waste stream **W4** containing unfiltered water that has not passed through the filter element(s) of fourth filter stage **S4.**

The individual filter stages are described in more detail as follows.

### Stage 1 - Coarse Solids

The first filter stage is employed to remove coarse solid contaminants larger than about 0.1 mm. In one embodiment, the first filter stage employs one or more strainer elements associated with an intake port that is placed into the contaminated water source. In one embodiment, the strainer element has an average opening diameter of from about 0.1 mm to about 1 mm. The first filter stage also comprises a pump configured to draw from the contaminated water source into the intake port and through the strainer element to provide a first filtrate which has had the coarse solid contaminants removed. The first filter stage is provided to decrease the filtration burden on downstream filter stages, thus increasing their filtration lifetime.

In one embodiment that may be particularly suitable for use with contaminated water sources containing a large amount of bulk solids, the one or more strainer elements include a perforated mesh at the intake end of the intake port having an average opening size of about 0.2 cm to about 1 cm to prevent the larger solid materials from entering the downstream filter stages.

In one embodiment that may be particularly suitable for use with contaminated water sources such as rivers or lakes, the system further comprises a flotation device attached to the intake port to prevent it from sinking below the surface of the water source to avoid contact with the muddy, sandy, or silty bottom of the water source to prevent a large influx of particulate materials that would rapidly overwhelm the subsequent stages of the filtration system.

The strainer or mesh elements may be manufactured from any suitable material, such as metal alloys (including but not limited to stainless steel and brass), metals (including but not limited to aluminum), and polymeric materials (including but not limited to PVC, PTFE, Nylon, or the like).

### Stage 2 - Fine Particulates

The second filter stage is employed to remove contaminants larger than about 40 nm, but may also preferably be configured to remove particulate contaminants as small as about 20 nm, which includes microorganisms such as bacteria, fungi, parasites and some larger viruses, as well as colloidal particles.

In one embodiment, the second filter stage comprises a hollow-fiber filtration membrane. In one embodiment, the second filter stage comprises a ceramic filter membrane. In one embodiment of a ceramic filter, the ceramic is a silicon carbide.

In one embodiment, the second filter stage further comprises a booster pump to pull the first filtrate through the ceramic filter.

In one embodiment, once the second stage filter has reached its filtration capacity, it can be regenerated using a reverse flow (or backwash) process by forcing clean water through the filter in the opposite flow direction to remove the filtered contaminants from the filter membrane. In one embodiment, once the second stage filter has reached its filtration capacity, it can be regenerated using a crossflow filtration process by forcing water across the filter to dislodge the filtered contaminants from the filter membrane. In one embodiment, the regeneration mechanism will be triggered automatically once built-in sensors have detected that the filter has reached filtration capacity. In one embodiment, the direction of flow is controlled by solenoid valves.

### Stage 3 - Dissolved Chemicals

The third filter stage is employed to remove dissolved chemical contaminants from the second filtrate. According to the invention, the third filter stage comprises at least one graphene-based filter cartridge containing at least one graphene-based material, for example, graphene and/or graphene oxide, which are particularly suitable for adsorbing and/or absorbing dissolved chemicals, including but not limited to organic compounds such as phenolic compounds, organic dyes, oil contaminants, volatile organic compounds, petrochemical compounds, and pharmaceutical drug molecules that can lead to undesirable colour and/or odour, as well as inorganic compounds such as ammonia, nitrite and dissolved metals including heavy metals.

In one embodiment, the graphene-based filter cartridge contains graphene. In one embodiment, the graphene is few layer graphene. In a further preferred embodiment, the few layer graphene is made using the process described in WO2013/089642 which provides a few layer graphene material having fewer defects (oxygen groups, or other impurities embedded in the carbon lattice) than other common sources of graphene, bilayer graphene, trilayer graphene, and few layer graphene (as described above) while also retaining the relatively large surface area of the flakes of from about 1 to about 1000 µm (about 1 to about 1000 microns) in lateral size.

In one embodiment, the few layer graphene is formed using a process comprising immersing at least a portion of graphite ore into a slurry comprising metal salt and organic solvent. The rock is electrochemically charged by incorporating the rock into at least one electrode and performing electrolysis through the slurry using the electrode and thereby introducing the organic solvent and ions from the metal salt from the slurry into the interlayer spacing of the graphite rock to form 1^{st}-stage charged graphite mineral that exfoliates from the graphite rock. The process further includes expanding the 1^{st}-stage charged graphite by applying an expanding force to increase the interlayer spacing between the atomic layers. As a result, few layered graphene sheets are obtained by a one step process from graphite ore.

In a preferred embodiment, the graphene material is Mesograf^{™}, which is a graphene comprising bilayer, trilayer, and few layer (up to 5 graphene layers) graphene nanoparticles having a flake size of 1-1000 µm (1-1000 microns), distributed within an overall powder-like state.

In one embodiment, the graphene-based filter cartridge contains graphene oxide. In one embodiment, the graphene oxide is few layer graphene oxide. In a preferred embodiment, the graphene oxide is formed by oxidizing few layer graphene made using the process described in WO2013/089642.

In one embodiment, the few layer graphene is mixed with sulfuric acid and then combined with a preformed mixture of Mn₂O₇ and rapidly heated to 50°C. The resulting oxidized material is few layer graphene oxide.

In one embodiment, the few layer graphene oxide is then refluxed in 5 M NaOH, filtered and washed with deionized water until pH is 8, and thereafter refluxed again in H₂SO₄. This creates a nanoporous graphene oxide which is then filtered, washed with deionized water until pH is 5-6 and then vacuum dried.

In one embodiment, the graphene-based material is provided within the cartridge housing as a loose powder, as a granular material or in pelletized form. In one embodiment, the graphene-based material is incorporated into or associated with a polymeric matrix or membrane. In one embodiment, a combination of two or more different types of graphene-based materials is provided with a single cartridge.

In one embodiment, the graphene-based filter cartridge may also contain additional non-graphene components, including activated carbon (powdered or granular), inert fillers, or polymeric materials to ensure adequate flowthrough rates.

In accordance with the present invention, the third filter stage of the filter system may include any combination of graphene-based filter cartridge types to provide the appropriate performance for removal of chemical contaminants known to be present in the contaminated water source.

The following is a description of exemplary graphene-based filter cartridges suitable for use in the filter system in accordance with embodiments of the present invention. These examples are not intended to limit the scope of the present invention.

### Type A cartridge

In one embodiment, the third filter stage comprises at least one graphene-based filter comprising a combination of graphene powder and pellets of a composite material comprising a mixture of polyether sulfone, graphene oxide, and dimethylformamide contained within the cartridge shell. This cartridge is referred to as a Type A cartridge. In one embodiment, the graphene is few layer graphene. In a further preferred embodiment, the few layer graphene is Mesograf^{™}.

In one embodiment, the pellets are about 0.1cm to about 1.0 cm in diameter. In one embodiment, the pellets comprise 50-80% by weight of the cartridge contents, and Mesograf comprises the remainder.

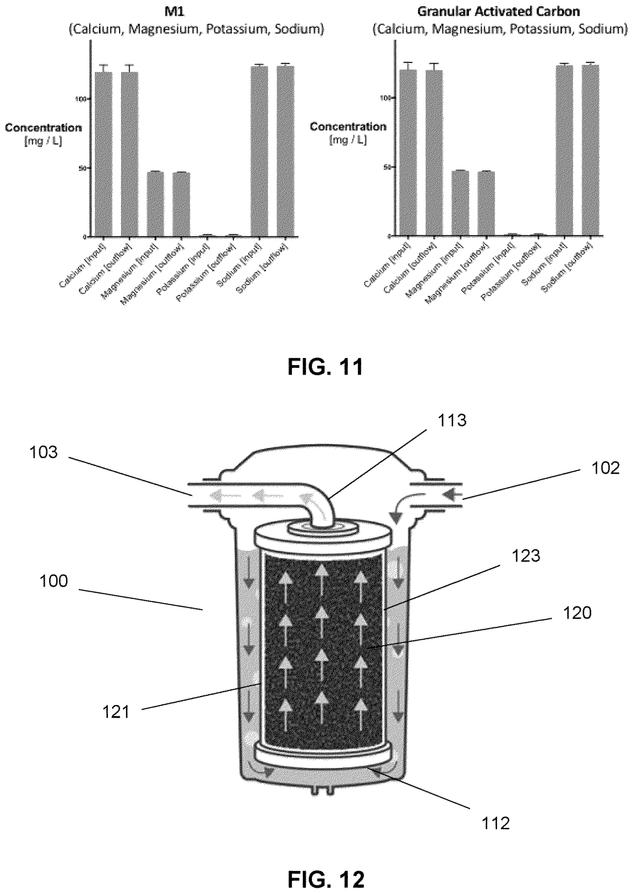

Fig. 12 is a schematic depiction of the components of one embodiment of a stage 3 filter **100,** including filter cartridge **123** containing filtering material **120** within housing **121,** the filter cartridge **123** having cartridge inlet **112** and cartridge outlet **113.** Also shown in Fig. 12 is inflow **102** and outflow **103** of stage 3 filter **100.**

A Type A cartridge is particularly suitable for removing phenolic compounds, organic dyes, and other organic compounds. In a preferred embodiment, a Type A cartridge is capable of achieving at least 99% efficiency in removal of organic dyes and 99% efficiency in removal of phenolic compounds from the source water. A Type A cartridge may also be used to reduce the chemical oxygen demand (COD) of the source water. COD provides a measure of the amount of organics in water, by measuring the amount of oxidizable pollutants found in a contaminated water source. Thus, COD can be correlated to the amount of oxidizable pollutants in the water. COD is reduced by directly removing the chemicals contributing to the COD via adsorption and absorption of these chemical contaminants by the graphene-based filter materials.

### Type B cartridge

In one embodiment, the third filter stage comprises at least one graphene-based filter comprising graphene powder contained within the cartridge shell. This cartridge is referred to as a Type B cartridge. In one embodiment, the graphene is few layer graphene. In a further preferred embodiment, the few layer graphene is Mesograf^{™}.

A Type B cartridge is particularly suitable for removing oil contaminants, phenolic compounds, organic dyes, organic compounds that can lead to undesirable colour and/or odour, inorganic compounds such as ammonia and nitrite, as well as reducing COD of the source water.

### Type C cartridge

In one embodiment, the third filter stage comprises at least one graphene-based filter comprising a composite material comprising a combination of chitosan and graphene oxide. This cartridge is referred to as a Type C cartridge. In one embodiment, the graphene oxide is few layer graphene oxide.

In one embodiment, the composite material comprises chitosan, about 1% to about 10% graphene oxide, sodium sulfate, and ferric chloride hexahydrate, prepared in a solvent mixture of water and acetic acid.

A Type B cartridge is particularly suitable for achieving up to 95% removal of inorganic compounds such as heavy metal ions from source water. The specific metal ions being removed may include lead, arsenic, chromium, copper, iron, aluminum, nickel, boron, or cadmium.

### Type M1 cartridge

In one embodiment, the third filter stage comprises at least one graphene-based filter comprising a combination of graphene powder, a composite material comprising chitosan and graphene oxide, and granular activated carbon. This cartridge is referred to as a Type M1 cartridge. In one embodiment, the graphene oxide is few layer graphene oxide. In one embodiment, the graphene is few layer graphene. In a further preferred embodiment, the few layer graphene is Mesograf^{™}.

In one embodiment, the composite material comprises chitosan, about 0.5% to about 10% graphene oxide, sodium sulfate, and ferric chloride hexahydrate, prepared in a solvent mixture of water and acetic acid.

**Table 1. Summary of material components of an M1 filter cartridge suitable for use in filtration stage 3 (S3) of a filter system in accordance with an embodiment provided as the Compact Filtration Suitcase (CFS).**

| **Material Name** | **Density (g / mL)** | **Percentage (%) by volume** |
|---|---|---|
| Graphene | 0.45 | 15 - 30% |
| Graphene oxide-chitosan composite | 1.7 | 15 - 30% |
| Granular Activated Carbon | 0.55 | 40 - 70% |

### Stage 3 (S3) Cartridge Configurations

In accordance with the present invention, multiple cartridges of a single type may be used in a parallel arrangement to increase flow through capacity of this stage.

In accordance with the present invention, multiple cartridges may be used in a serial arrangement. In one embodiment, the multiple cartridges may all be of the same type, for example, to increase the filtration effectiveness for a specific contaminant. In one embodiment, the multiple cartridges may be of different types, for example, to increase the filtration effectiveness for multiple contaminants.

The type of cartridge chosen for use in the system depends on the type of chemical contaminant that is present in the source water. For example, if there was a high amount of dye in the water, without concern for reduction of COD or removal of heavy metals, the system could be outfitted with multiple Type A cartridges. If removal of heavy metals and dye were a concern, Type A, C and/or M1 cartridges could be combined in series to target both. The large matrix of possible cartridge combinations allows the system of the present invention to be customizable to the source water specifics.

In one embodiment, the filter system can employ any combination of up to 5 cartridges of Type M1, A, B, and/or C.

The effectiveness of the chemical contaminant removal can be measured using both quantitative and qualitative methods, selected according to the nature of the contaminant being removed. These include methods of chemical detection as are known in the art, including but not limited to, absorbance assays, assays that employ direct and indirect colorimetric analysis of analytes, gas chromatography coupled with suitable analyte detectors to measure the presence of analytes, for example, mass spectrometers, electron capture detectors or flame ionization detectors. For example, removal of a dye contaminant can be qualitatively measured by detection of a decrease in the colour of the filtrate as compared to the input solution.

Each of the types of graphene-based filter cartridges may be regenerated for reuse once the cartridge has reached its filtration/adsorption capacity. In one embodiment, the regeneration process comprising passing a dilute aqueous solution of an acid (for example, sulfuric acid or hydrochloric acid) or a base (for example, sodium hydroxide), through the cartridge. This regeneration protocol allows the cartridges to be reused, which provides a sustainability benefit that cannot be achieved using prior art activated carbon-based filters, which must be disposed of after reaching their filtration capacity is reached.

The graphene oxide-chitosan composite employed in the M1 filter cartridge was found to be an efficient adsorbent of heavy metals while also being readily regenerated for repeated use.

For the adsorption of heavy metals and subsequent regeneration of the chitosan-based adsorbent, an effective, fast, and easy way to regenerate the adsorbents saturated by heavy metals is through adjustment of the pH to the point where desorption can occur. The adsorption can be physisorption or chemisorption. In terms of adsorbent regeneration, physical adsorption is the desirable type due to its reversibility. In contrast, the chemical adsorption is usually an irreversible reaction which makes it impossible or very hard to desorb the adsorbates from the adsorbents surface. Fortunately, the dominant part of heavy metals adsorption on the chitosan surface is physical and reversible. According to zeta potential results reported for chitosan materials in different studies, the surface of chitosan material is expected to be positively charged at pH<7 and it turns to negative at pH>7 (Mukherjee et al., "Sustainable and Affordable Composites Built Using Microstructures Performing Better than Nanostructures for Arsenic Removal," ACS Sustain. Chem. Eng., vol. 7, no. 3, pp. 3222-3233). Furthermore, the behavior of heavy metals in aqueous media at different pH levels depends on their surface charges. Therefore, the most efficient regeneration can occur in a certain range of pH where desorption is maximum.

For Cr, As, and Fe cations which have surface charges of 3+ or more, some complex compounds are generated at different pH (Mukherjee et al., ACS Sustain. Chem. Eng.; Hadi Najafabadi et al., "Removal of Cu2+, Pb2+ and Cr6+ from aqueous solutions using a chitosan/graphene oxide composite nanofibrous adsorbent," RSC Adv., vol. 5, no. 21, pp. 16532-16539, 2015). At pH of lower than 2, the complex compounds have no charges on their surface results in lower adsorption rate. By increasing the pH, the components with more negative charges appear in the aquatic media. Therefore, at basic pH repulsion between the charges on the surface of complex heavy metal compounds and the surface of adsorbent will be stronger which results in desorption or precipitation of heavy metals. While, the maximum adsorbent can occur between pH range of 2-7 in which the chitosan surface is positive and the heavy metals component surface is negative.

In case of the cations with 2+ surface charges like Pb, Ni, Cu, or Cd, there is a different scenario. High desorption rate at pH<2 can be explained by the protonation of amide groups on the surface of chitosan material. The electrostatic repulsion between -NH₃ and heavy metal cations reduces the adsorption rate. With the increase in pH, the amide protonation decreases results in increasing the adsorption. Then, at basic pH, due to formation of hydroxylated heavy metal complexes, the desorption or precipitation might happen (Hadi Najafabadi et al., RSC Adv.*;* Sheshmani et al. "Preparation of graphene oxide/chitosan/FeOOH nanocomposite for the removal of Pb(II) from aqueous solution," Int. J. Biol. Macromol., vol. 80, pp. 475-480, 2015). As a conclusion, the best pH ranges for heavy metal regeneration of chitosan based materials are pH<2 or pH>11.

### Stage 4 - Nano-sized Particles

The fourth filter stage is employed to mechanically remove any particles remaining in the third filtrate that were either too small to be captured by the previous filter stages, including for example, small viruses or nanometer-scale sized particles, or particles released by the third stage, thus providing the final purified water product.

In one embodiment, the fourth filter stage comprises a filter membrane having an average pore opening diameter of from about 8 nm to about 20 nm.

In one embodiment, the fourth filter stage comprises a hollow fiber membrane filter. In one embodiment, a hollow fiber membrane having an average pore diameter of about 8 nm to about 20 nm is chosen to allow passage of the water through at a flow rate of at least 100 litres per hour, while preventing particles larger than 20 nanometers from exiting this stage in the water outflow.

The fourth filter stage can reduce the nanoparticle concentrations to 1-10 ppb, therefore improving the safety of the graphene-based filtration device of the present invention for continuous use in creating a supply of drinking water. The fourth filter stage also provides for the removal of any nanoscale graphene or graphene oxide particles that may leach into the outflow water from the third filter stage. Heretofore, graphene or graphene oxide nanoparticles have not been recognized as a human health concern, but are detectable at 50-250 ppb in the outflow of the third filter stage. Although this concentration is well below the current estimates of a toxicity threshold of 1ppm, the fourth filter stage therefore provides an additional degree of safety for human consumption of the output drinking water.

In one embodiment, once the fourth stage filter has reached its filtration capacity, it can be regenerated using a crossflow filtration process by forcing water across the filter to dislodge the filtered contaminants from the filter membrane.

The invention will now be described with reference to specific examples. It will be understood that the following examples are intended to describe embodiments of the invention and are not intended to limit the invention in any way.

### EXAMPLE 1: Type A Cartridge

The performance characteristics for removing phenol and methylene blue of one exemplary embodiment of a Type A cartridge comprising 56 g of pellets comprising polyether sulfone and graphene oxide and 18 grams of Mesograf^{™} powder in a 25 cm (10 inch) cartridge operating at an operating pressure of 69-414 kPa (10-60 psi) are summarized in Table 2. The water sample was obtained from the Singapore River. Dye concentration in the filtrate is determined using an absorbance assay at 668 nm (the absorbance peak for methylene blue dye).

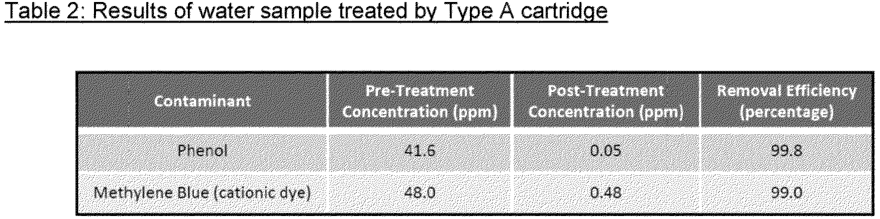

The Type A cartridge was restored to >90% of its original performance capacity upon regeneration with an aqueous 0.1 M hydrochloric acid solution.

### EXAMPLE 2: Type B Cartridge

The performance characteristics for removing phenol and ammonia and reducing COD of one exemplary embodiment of a Type B cartridge comprising 60 grams of Mesograf^{™} powder in a 25 cm (10 inch) cartridge operating at an operating pressure of 69-414 kPa (10-60 psi) are summarized in Table 3. The water sample was obtained from the Singapore River. Ammonia, phenol and
COD levels in the samples were determined using colorimetric analytical methods as are known in the art.

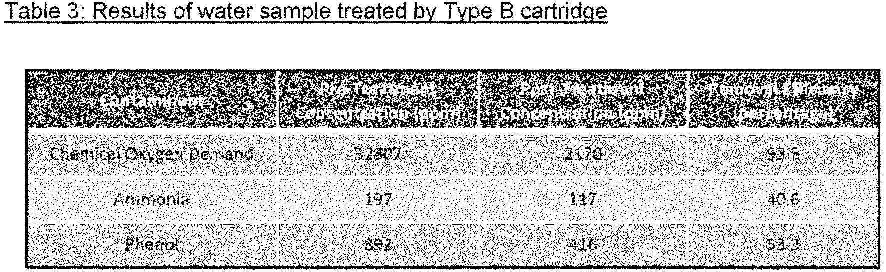

The Type A cartridge was restored to >90% of its original performance capacity upon regeneration with an aqueous 0.1 M hydrochloric acid solution.

### EXAMPLE 3: Type C Cartridge

One exemplary embodiment of a Type C cartridge comprising a graphene oxide and chitosan polymer composite comprising 2% by weight of graphene oxide in a 25-cm (10-inch) cartridge was shown to remove greater than 98% of lead ion (Pb²⁺) contamination from a wastewater sample comprising an initial concentration of Pb²⁺ of 190 ppm. The concentration of Pb²⁺ is determined by ICP-OES elemental analysis.

A Type C cartridge was restored to >90% of its original performance capacity upon regeneration with an aqueous 0.1 M hydrochloric acid solution.

### EXAMPLE 4: Preparation of Graphene Oxide-Chitosan Composite

A mixture of 6 L of water and 500 mL of a paste of graphene oxide in water (6 mg/mL) is combined in a 10 L mixing vessel, and stirred overnight. 120 mL of glacial acetic acid was added to the mixing vessel, and stirring continued for 1 hour, followed by addition of 72 g of chitosan powder. Stirring continued for 48 hours to disperse all solids. Once solids were dispersed, a solution of 420g of Na₂SO₄ in 200 mL H₂O was added to the mixing vessel, and stirring continued for about 12 hours, or until dissolution was complete. 1L of 1M FeCl₃.6H₂O was added, and stirred for approximately 3-5 hours. Approximately 450 mL of NaOH solution (500 g/L) was added to adjust the pH to 10. Stirring continued for 3 days. The pH level was checked every 24 hours to ensure the pH remained at pH 10, with adjustment through addition of 1M NaOH or 98% acetic acid to maintain the desired pH level. Solids were filtered by centrifugation and the resulting solid product was dried in an oven at 85 °C for 12 hours. The dried product was washed with water at 300RPM, the solids were again collected by centrifugation. The washing step was repeated until the total dissolved solids level of the waste water is <50 or the conductivity of the waste water is < 100 µm S/cm (100 micron S/cm). The washed product was heated in an oven at 65 °C for 48-72 hours for complete removal of water.

### EXAMPLE 5: Type M1 Cartridge

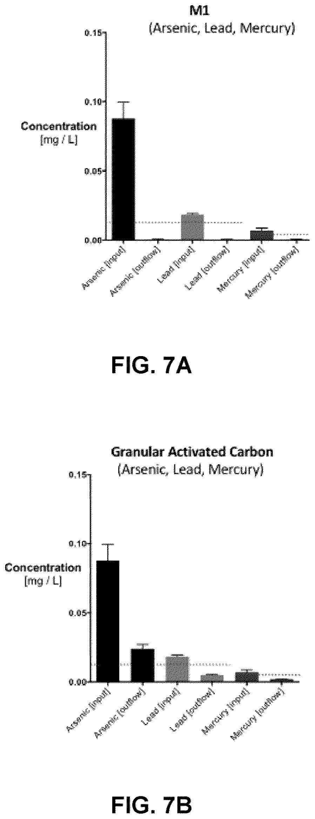

The filtration performance of an exemplary Type M1 cartridge was assessed in comparison to a prior art granulated activated carbon (GAC) filter cartridge. The resulting comparative data is presented in Figs. 7 to 11, which highlight the superior performance of the M1 cartridge in comparison with a prior art granular activated carbon (GAC) filter for adsorption of dissolved chemicals at flow rates of 300 L / hour. The combination of filtering materials within the M1 cartridge achieve high removal efficiency for a wide-range of dissolved chemical contaminants within a water source passing through (such as lead, arsenic, mercury, iron, other heavy metals, organic compounds (dyes, phenols, oil products)), while leaving behind minerals in the filtered water that are not harmful to human health, such as sodium, potassium, magnesium, and calcium.

The general protocol used to generate the comparative data reported in Figs. 7 to 9 and 11 is described below. Three independent experiments were performed following this protocol, and the results were averaged:
- A stock solution of each analyte was diluted into 20 L of water to provide an experimental water sample for each analyte.
- A sample of each diluted analyte solution was retained for comparison, to be reported as [input], for unfiltered water.
- Each experimental water sample was pumped through an M1 filter cartridge (described in Table 4) at a flow rate of 300 L / hour.
- A sample of the filtrate for each experimental water sample was collected after filtration, and labelled as [output].
- The concentration of analyte in each [input] and [output] sample was assessed.

Fig. 7A shows the performance of the M1 cartridge and Fig. 7B shows the performance of the prior art GAC filter cartridge in removing arsenic, lead and arsenic from an input water sample by plotting the concentration of these contaminants in the input water sample and the output water sample after filtration. The M1 cartridge is demonstrated to remove more of each contaminant than the prior art GAC filter cartridge.

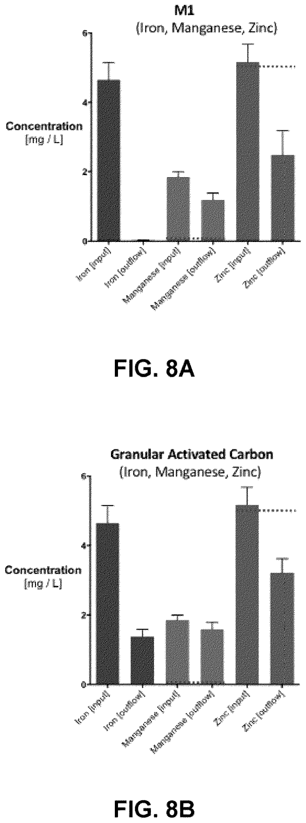

Fig. 8A shows the performance of the M1 cartridge and Fig. 8B shows the performance of the prior art GAC filter cartridge in removing iron, manganese and zinc from an input water sample by plotting the concentration of these contaminants in the input water sample and the output water sample after filtration. The M1 cartridge is demonstrated to remove more of each contaminant than the prior art GAC filter cartridge.

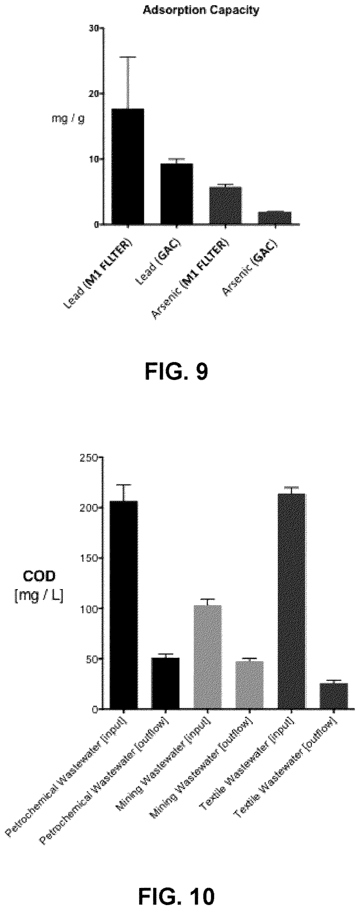

Fig. 9 shows a comparison of the adsorption capacities of the M1 cartridge and prior art GAC filter cartridge for adsorbing lead and arsenic. The M1 cartridge is demonstrated to have a higher adsorption capacity than the prior art GAC filter cartridge.

Fig. 10 shows the performance of the M1 cartridge for decreasing the chemical oxygen demand (COD) in wastewater samples including petrochemical wastewaters, mining wastewaters, and textile wastewaters.

Fig. 11A shows the effect of the M1 cartridge and Fig. 11B shows the effect of the prior art GAC filter cartridge on calcium, magnesium, potassium and sodium levels by plotting the concentration of these elements in the input water sample and the output water sample after filtration. The M1 cartridge exhibits a comparable performance to that of the prior art GAC filter cartridge.

**Table 4. Summary of material components contained in the assessed M1 filter cartridge.**

| **Material Name** | **Percentage (%) by volume** |
|---|---|
| Mesograf^{™ a} | Approx 28% |
| Graphene oxide-chitosan composite ^{b} | Approx 15% |
| Granular Activated Carbon ^{c} | Approx 47% |

| | |
|---|---|
| (a) Mesograf^{™}, obtained from Grafoid Inc., Kingston Ontario (b) prepared according to the methods of Example 4 (c) GC 12x40s, General Carbon Corp., from coconut shell | |

### EXAMPLE 6: Portable Filtration System

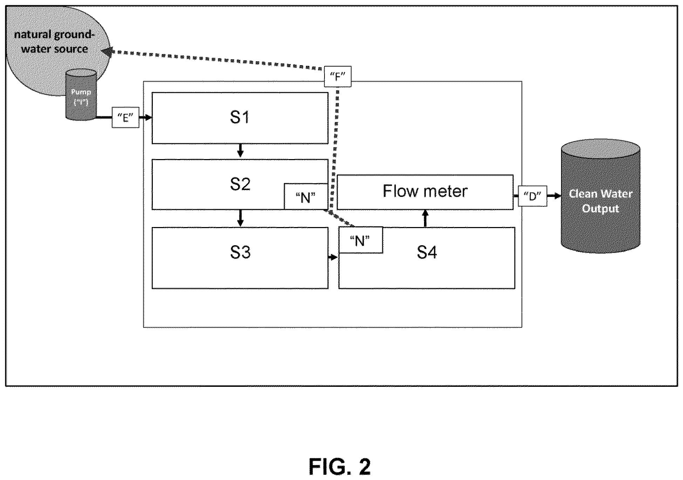

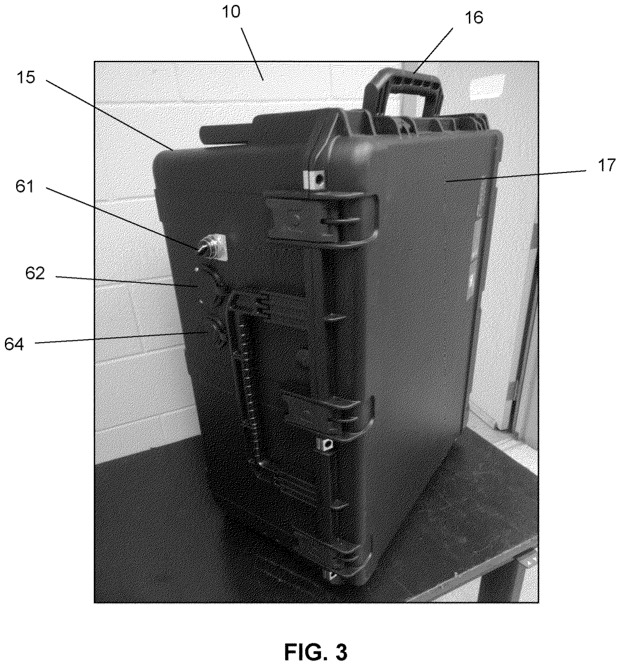

FIG. 2 is a flow diagram which represents the process by which water from a natural water source (WS) passes through the four filtration stages **(S1, S2, S3, S4)** within a filter system in accordance with an embodiment of the present invention, which is provided here as a Compact Filtration Suitcase (CFS) system as shown in Figs. 3 to 6. The solid arrows depict the primary path of water flow that generates filtered water after treatment at **S1, S2, S3,** and **S4.** The dashed arrow depicts the secondary path of water flow, controlled by built-in solenoid valves ("N") and CFS software programming for the purpose of periodically cycling to automatic cleaning of filtration stages S2 and S4, which generates a waste stream of unfiltered (also referred to as "overflow") water that exits the CFS through a separate hose at port "F."

FIG. 3 is an image of CFS system **10** with case **15** having lid **17** fully sealed. Also shown is CFS on/off switch **61,** power cord inlet port **62,** and power outlet port **64** for connection to the pump (not shown). CFS system **10** is provided with handle **16** to facilitate transport to the site of water treatment.

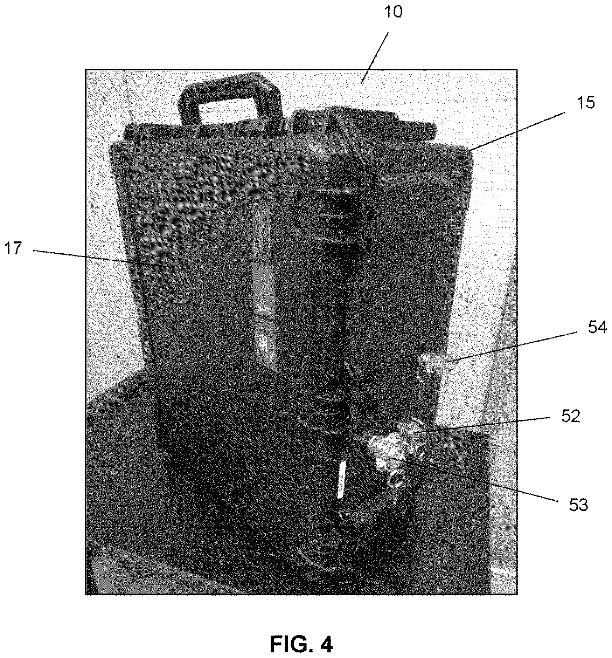

FIG. 4 is an image of CFS system **10** with lid **17** fully sealed. Also shown is clean water discharge outlet connection port **54,** water intake connection port **53,** and unfiltered overflow water outlet connection port **52.**

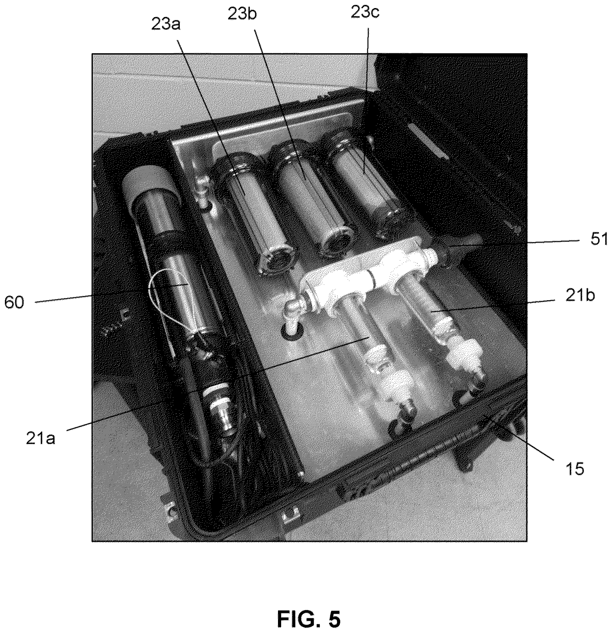

FIG. 5 is a top-down image of CFS system **10,** with lid **17** fully opened, showing the components contained in the upper compartment of the CFS, including water intake inlet **51** that connects to water intake connection port **53** shown in FIG 4. Filter stage 1 **(S1)** is provided for removal of coarse solids, and includes two strainer elements **21a** and **21b** arranged in series, where the unfiltered water passes first through a 150 µm (150 micron) mechanical filter, then through a 15 µm (15 micron) mechanical filter to sequentially reduce the size of particles in the feed water that flows subsequently into filter stage 2 (S2) (not shown). Portable pump **60,** shown in storage compartment **50,** is removed from the CFS and placed in the water source during system operation. Once removed from the CFS, portable pump **60** connects to power outlet **64** and water intake connection port **53** described in FIG 3 and FIG 4, respectively. Also shown is filter stage 3 (S3) comprising three graphene filter cartridges **23a, 23b** and **23c** in series.

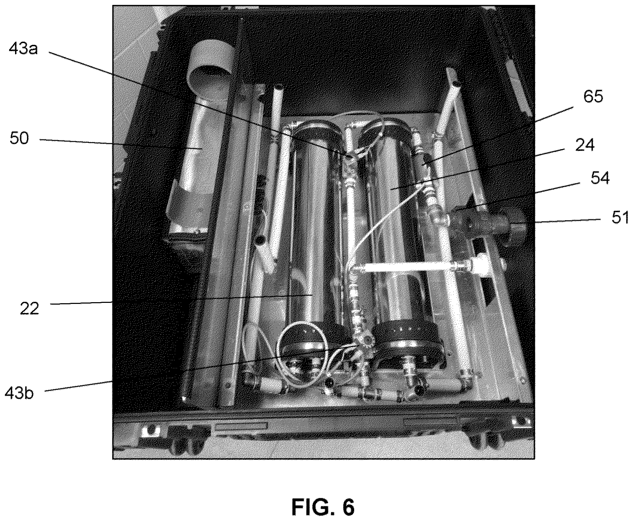

FIG. 6 is a top-down image of CFS system **10,** with lid **17** fully opened, showing the components contained in the lower compartment of the CFS. When the CFS is in operation, the lower compartment is not visible to the system operator since the upper compartment is also present. Shown is filter stage 2 **(S2)** comprising filter cartridge **22,** and filter stage 4 **(S4),** comprising filter cartridge **24.** Flow rate meter device **65** is provided to measure the water flow rate just prior to exiting clean water discharge outlet **54.** Also provided are programmable solenoid valves **43a** and **43b** that control the water flow and CFS self-cleaning mechanism built into filtration stages **S2** and **S4** and the CFS programming. Compartment **50** for storage of portable pump **60,** electrical connector components, and connection hoses (all not shown). Water intake inlet **51** is shown but is unconnected to filter stage **S1** as shown in FIG 5.

**Table 5. Summary of average pressure ratings and clean water output flow rate**

| **S2 pressure** (kPa) ((psi)) | **S3 pressure** (kPa) ((psi)) | **S4 pressure** (kPa) ((psi)) | **Output Flow Rate** (Litres / Hour) |
|---|---|---|---|
| 431 ± 14 (62.5 ± 2) | 359 ± 21 (52 ± 3) | 248 ± 34 (36 ± 5) | 300 - 500 |

Table 5 provides a summary of average pressure ratings and corresponding clean water output flow rate at three key locations within the Compact Filtration Suitcase (CFS) System flow diagram during automatic CFS operating conditions for filtration of water obtained from Lake Ontario in Kingston, ON.

### EXAMPLE 7: Measurements of Graphene-Based Nanoparticles in Filtrate After Filtration by Filter Stages 3 and 4 (S3 and S4)

**Experimental Setup:** Briefly, clean distilled water (dH₂O) was used to stress test CFS filtration stage 3 **(S3)** over a three-hour experiment in which the dH₂O was continuously cycled directly through an M1 filter cartridge as described in Example 5 in a closed loop system. Under all experimental conditions, a separate water sample (volume = 2000 mL) was taken for timepoint A (10 minutes of CFS operation) and timepoint B (180 minutes of CFS operation). Under experiment Condition 1, the water passing through **S3** filters was sampled directly into 2000 mL beakers and labelled to note the timepoint and sample ID. Under experiment Condition 2, the water passing through **S3** filters was subsequently passed through **S4** filters, then **S4** filtered water was sampled directly into 2000 mL beakers and labelled to note the timepoint and Sample ID. The collected 2000 mL water samples were subsequently handled by personnel employed at the Department of Chemical Engineering at Queen's University. Briefly, the 2000 mL water samples were centrifuged at 19950 RCF for 15 minutes to create a 'pellet' of solids which would contain graphene-based nanoparticles picked up in the distilled water from S3.

Prior to analysis by UV-Vis Spectroscopy to detect suspended graphene and graphene oxide particles, the pellet of solids was resuspended in a 10 mL volume of dH₂O, which represented a 200x concentration when compared to the original sample volume of 2000 mL. UV-Vis Spectroscopy was utilized to generate a standard curve to describe the relationship between graphene oxide concentration standards ranging from 10 parts per billion (ppb) to 100 parts per million (ppm) and UV-Vis absorbance at 230 nanometer (nm) wavelength setting. UV-Vis Spectroscopy was utilized to generate a standard curve to describe the relationship between graphene concentration standards ranging from 10 parts per billion (ppb) to 100 parts per million (ppm) and UV-Vis absorbance at 265 nm wavelength setting. For these experimental control sample standard curves, an equation of the curve was generated using Microsoft Excel software. R² values of 0.93 and 0.99 were recorded, respectively. The equation of the curve was used for subsequent analysis of the unknown, 200x concentrated, samples for experiment Condition 1 and experiment Condition 2, which were subjected to UV-Vis Spectroscopy at both 230 nm and 265 nm wavelength settings to detect graphene oxide and/or graphene nanoparticles, respectively. For the unknown, 200x concentrated samples, the absorbance values obtained at 230 nm and 265 nm were used to calculate the expected concentration of graphene oxide and graphene nanoparticles, respectively, from the equation of the curves generated for graphene oxide and graphene experimental controls. The determined concentration for the unknown sample was then divided by 200x to represent the actual concentration within the 2000 mL sample, rather than the centrifuged and concentrated 10 mL sample used for nanoparticle detection purposes only.

**Table 6. Summary of filtration stage 4 (S4) performance**

| **Sample ID** | **Graphene Oxide Concentration** | **Graphene Concentration** |
|---|---|---|
| | (ppb) | (ppb) |
| Condition 1, Timepoint A (10 min) | 31.2 - 32.8 | Not detected |
| Condition 1, Timepoint B (180 min) | 57.9 - 72.4 | Not detected |
| Condition 2, Timepoint A (10 min) | Not detected | Not detected |
| Condition 2, Timepoint B (180 min) | Not detected | Not detected |

### EXAMPLE 8: Assessment of Filter Stage 2 (S2) Bacterial Filtration Performance

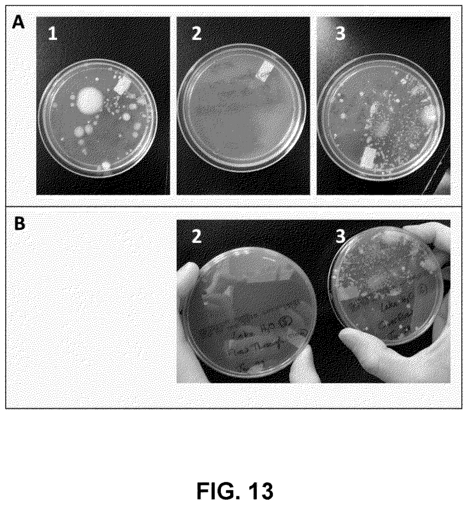

FIGS. 13A and 13B provide a series of images that demonstrate the performance of filter stage 2 **(S2),** also known as the mechanical filter element for removal of fine particulates. S2 is proven to remove fine particulates from source water, including environmental bacteria cultured from Lake Ontario. Fig. 13A(1) demonstrates the ability of approximately 1000 colony forming units of bacteria per mL, obtained from a 200 L water sample taken from the Kingston, Ontario shoreline of Lake Ontario, to grow on nutrient agar under static growth conditions at 37°C after 18 hours. Fig. 13A(2) demonstrates that there is no presence of bacteria within the water that is filtered directly through filter **S2** when plated onto the same nutrient agar and grown under the same condition as Fig. 13A(1). Fig. 13A(3) demonstrates that there is presence of bacteria within the water that is unfiltered and passes by filter **S2** as "overflow." Overflow water is removed from the filtration system through a separate, "unclean" hose than the filtered "clean" water that moves from filter **S2** and subsequently into filter stage 3 **(S3).** Figs. 13B(2) and 12B(3) are reverse views of the same plates shown above in Figs. 13A(2) and 13A(3), respectively.

## Claims

1. A portable multi-stage filter system for remediation of water from a contaminated water source to provide a purified water product, the system comprising:
- a first filter stage configured to remove coarse solid contaminants, the first filter stage comprising:
an intake port for placement into the contaminated water source;
at least one strainer element; and
a pump configured to draw water from the contaminated water source into the intake port and through the strainer element to provide a first filtrate;
- a second filter stage configured to remove contaminants larger than about 20 nm to about 40 nm to provide a second filtrate;
- a third filter stage configured to remove dissolved chemical contaminants from the second filtrate to provide a third filtrate, the third filter stage comprising at least one graphene-based filter containing at least one graphene-based material;
- a fourth filter stage configured to remove residual nanoparticle contaminants from the third filtrate to provide the purified water product;
- an outflow structure configured to convey the purified water product from the fourth filter stage for discharge; and
a portable system housing, wherein the first filter stage, the second filter stage, the third filter stage and fourth filter stage are contained within the portable system housing.

2. The system of claim 1, wherein the contaminated water source is contaminated groundwater, industrial wastewater, mine tailings, natural flowing fresh water, lake water, pond water, rain water runoff, or a source of fresh water with unknown dissolved or dispersed contaminants.

3. The system of claim 1 or 2, wherein the system further comprises a power source.

4. The system of any one of claims 1 to 3, wherein the first filter stage further comprises a coarse strainer element configured to remove coarse solid contaminants larger than about 0.2 cm, wherein the coarse strainer element is located at the intake end of the intake port.

5. The system any one of claims 1 to 4, wherein the second filter stage comprises a filter element having an average pore opening diameter of about 20 nm to about 40 nm, preferably about 10 nm to about 20 nm.

6. The system of any one of claims 1 to 5, wherein the second filter stage comprises an ultrafiltration device, wherein the ultrafiltration device is preferably a ceramic filter or a hollow fiber membrane, and wherein the second filter stage optionally comprises a booster pump to pull the first filtrate through the filter.

7. The system of claim 6, wherein the second filter stage is configured for regeneration by flushing with clean water in a reverse flow or crossflow direction, preferably wherein the second filter stage is configured for automatic regeneration once the second filter stage has reached filtration capacity.

8. The system of any one of claims 1 to 7, wherein the graphene-based material in the third filter stage is graphene, preferably few layer graphene, and/or graphene-oxide, preferably few layer graphene oxide.

9. The system of any one of claims 1 to 8, wherein the at least one graphene-based filter in the third filter stage comprises:
a combination of few-layer graphene powder and pellets comprising a mixture of polyether sulfone, graphene oxide, and dimethylformamide (Type A); or
few-layer graphene powder (Type B); or
a combination of chitosan, about 0.1% to about 10% by weight of few layer graphene oxide, sodium sulfate, and ferric chloride hexahydrate (Type C); or
few-layer graphene powder, a composite comprising chitosan, about 0.1% to about 10% by weight of few layer graphene oxide, sodium sulfate, and ferric chloride hexahydrate, and granular activated carbon (Type M1).

10. The system of any one claim 9, wherein the at least one graphene-based filter is configured for regeneration by flushing with a dilute aqueous acid solution.

11. The system of any one of claims 1 to 10, wherein the fourth filter stage comprises a filter membrane having an average pore opening diameter of from about 8 nm to about 20 nm.

12. The system of any one of claims 1 to 11, wherein the fourth filter stage comprises a hollow fiber membrane filter.

13. The system of any one of claims 1 to 12, wherein each of the first filter stage, the second filter stage, the third filter stage and the fourth filter stage is removable and replaceable.

## Patentansprüche

1. Tragbares mehrstufiges Filtersystem zur Sanierung von Wasser aus einer verunreinigten Wasserquelle, um ein gereinigtes Wasserprodukt bereitzustellen, wobei das System Folgendes umfasst:
- eine erste Filterstufe, die dafür konfiguriert ist, grobe feste Verunreinigungen zu entfernen, wobei die erste Filterstufe Folgendes umfasst:
eine Einlassöffnung zur Platzierung in der verunreinigten Wasserquelle;
mindestens ein Siebelement; und
eine Pumpe, die dafür konfiguriert ist, Wasser von der verunreinigten Wasserquelle in die Einlassöffnung und durch das Siebelement zu saugen, um ein erstes Filtrat bereitzustellen;
- eine zweite Filterstufe, die dafür konfiguriert ist, Verunreinigungen zu entfernen, die größer als etwa 20 nm bis etwa 40 nm sind, um ein zweites Filtrat bereitzustellen;
- eine dritte Filterstufe, die dafür konfiguriert ist, gelöste chemische Verunreinigungen aus dem zweiten Filtrat zu entfernen, um ein drittes Filtrat bereitzustellen, wobei die dritte Filterstufe mindestens einen Filter auf Graphenbasis umfasst, der mindestens ein Material auf Graphenbasis enthält;
- eine vierte Filterstufe, die dafür konfiguriert ist, restliche Nanopartikelverunreinigungen aus dem dritten Filtrat zu entfernen, um das gereinigte Wasserprodukt bereitzustellen;
- eine Abflussanordnung, die dafür konfiguriert ist, das gereinigte Wasserprodukt von der vierten Filterstufe zum Ablassen zu transportieren; und
ein tragbares Systemgehäuse, wobei die erste Filterstufe, die zweite Filterstufe, die dritte Filterstufe und die vierte Filterstufe in dem tragbaren Systemgehäuse enthalten sind.

2. System nach Anspruch 1, wobei es sich bei der verunreinigten Wasserquelle um verunreinigtes Grundwasser, Industrieabwasser, Aufbereitungsrückstände des Bergbaus, natürliches fließendes Süßwasser, Seewasser, Teichwasser, Regenwasserabfluss oder eine Süßwasserquelle mit unbekannten gelösten oder dispergierten Verunreinigungen handelt.

3. System nach Anspruch 1 oder 2, wobei das System weiter eine Energiequelle umfasst.

4. System nach einem der Ansprüche 1 bis 3, wobei die erste Filterstufe weiter ein grobes Siebelement umfasst, das dafür konfiguriert ist, grobe feste Verunreinigungen, die größer als etwa 0,2 cm sind, zu entfernen, wobei sich das grobe Siebelement am Einlassende der Einlassöffnung befindet.

5. System nach einem der Ansprüche 1 bis 4, wobei die zweite Filterstufe ein Filterelement mit einem durchschnittlichen Porenöffnungsdurchmesser von etwa 20 nm bis etwa 40 nm, vorzugsweise etwa 10 nm bis etwa 20 nm, umfasst.

6. System nach einem der Ansprüche 1 bis 5, wobei die zweite Filterstufe eine Ultrafiltrationsvorrichtung umfasst, wobei die Ultrafiltrationsvorrichtung vorzugsweise ein keramischer Filter oder eine Hohlfasermembran ist, und wobei die zweite Filterstufe optional eine Druckerhöhungspumpe umfasst, um das erste Filtrat durch den Filter zu ziehen.

7. System nach Anspruch 6, wobei die zweite Filterstufe für eine Regeneration durch Spülen mit sauberem Wasser in umgekehrter Strömungs- oder Querströmungsrichtung konfiguriert ist, wobei vorzugsweise die zweite Filterstufe für eine automatische Regeneration konfiguriert ist, sobald die zweite Filterstufe die Filtrationskapazität erreicht hat.

8. System nach einem der Ansprüche 1 bis 7, wobei es sich bei dem Material auf Graphenbasis in der dritten Filterstufe um Graphen, vorzugsweise Graphen mit wenigen Schichten, und/oder Graphenoxid, vorzugsweise Graphenoxid mit wenigen Schichten, handelt.

9. System nach einem der Ansprüche 1 bis 8, wobei der mindestens eine Filter auf Graphenbasis in der dritten Filterstufe Folgendes umfasst:
eine Kombination aus Graphenpulver mit wenigen Schichten und Pellets, die eine Mischung aus Polyethersulfon, Graphenoxid und Dimethylformamid (Typ A) enthalten; oder
Graphenpulver mit wenigen Schichten (Typ B); oder
eine Kombination aus Chitosan, etwa 0,1 bis etwa 10 Gew.% Graphenoxid mit wenigen Schichten, Natriumsulfat und Eisen-III-Chlorid-Hexahydrat (Typ C); oder
Graphenpulver mit wenigen Schichten, ein Verbundstoff, der Chitosan, etwa 0,1 bis etwa 10 Gew.-% Graphenoxid mit wenigen Schichten, Natriumsulfat und Eisen-III-Chlorid-Hexahydrat enthält, und körnige Aktivkohle (Typ M1).

10. System nach einem der Ansprüche 9, wobei der mindestens eine Filter auf Graphenbasis für die Regeneration durch Spülen mit einer verdünnten wässrigen Säurelösung konfiguriert ist.

11. System nach einem der Ansprüche 1 bis 10, wobei die vierte Filterstufe eine Filtermembran mit einem durchschnittlichen Porenöffnungsdurchmesser von etwa 8 nm bis etwa 20 nm umfasst.

12. System nach einem der Ansprüche 1 bis 11, wobei die vierte Filterstufe einen Hohlfasermembranfilter umfasst.

13. System nach einem der Ansprüche 1 bis 12, wobei sich jede der ersten Filterstufe, der zweiten Filterstufe, der dritten Filterstufe und der vierten Filterstufe herausnehmen und austauschen lässt.

## Revendications

1. Système de filtre à étages multiples portable pour la réhabilitation d'eau à partir d'une source d'eau contaminée pour fournir une eau produite purifiée, le système comprenant :
- un premier étage de filtre configuré pour retirer les contaminants solides grossiers, le premier étage de filtre comprenant :
un orifice d'admission destiné à être placé dans la source d'eau contaminée ;
au moins un élément formant crépine ; et
une pompe configurée pour aspirer de l'eau à partir de la source d'eau contaminée dans l'orifice d'admission et à travers l'élément formant crépine pour fournir un premier filtrat ;
- un deuxième étage de filtre configuré pour retirer les contaminants plus gros qu'environ 20 nm à environ 40 nm pour fournir un deuxième filtrat ;
- un troisième étage de filtre configuré pour retirer les contaminants chimiques dissous dans le deuxième filtrat pour fournir un troisième filtrat, le troisième étage de filtre comprenant au moins un filtre à base de graphène contenant au moins un matériau à base de graphène ;
- un quatrième étage de filtre configuré pour retirer les contaminants nanoparticulaires résiduels dans le troisième filtrat pour fournir l'eau produite purifiée ;
- une structure de sortie configurée pour convoyer l'eau produite purifiée à partir du quatrième étage de filtre afin qu'elle soit évacuée ; et
- un boîtier de système portable, dans lequel le premier étage de filtre, le deuxième étage de filtre, le troisième étage de filtre et le quatrième étage de filtre sont contenus à l'intérieur du boîtier de système portable.

2. Système selon la revendication 1, dans lequel la source d'eau contaminée est une eau souterraine contaminée, une eau usée industrielle, des résidus d'extraction minière, une nappe d'eau douce naturelle, de l'eau de lac, de l'eau d'étang, un ruissellement d'eau de pluie, ou une source d'eau douce ayant des contaminants dissous ou dispersés inconnus.

3. Système selon la revendication 1 ou 2, lequel système comprend en outre une source d'alimentation électrique.

4. Système selon l'une quelconque des revendications 1 à 3, dans lequel le premier étage de filtre comprend en outre un élément formant crépine grossière configurée pour retirer les contaminants solides grossiers plus gros qu'environ 0,2 cm, dans lequel l'élément formant crépine grossière est situé à l'extrémité d'admission de l'orifice d'admission.

5. Système selon l'une quelconque des revendications 1 à 4, dans lequel le deuxième étage de filtre comprend un élément de filtre ayant un diamètre d'ouverture de pore moyen d'environ 20 nm à environ 40 nm, de préférence d'environ 10 nm à environ 20 nm.

6. Système selon l'une quelconque des revendications 1 à 5, dans lequel le deuxième étage de filtre comprend un dispositif d'ultrafiltration, dans lequel le dispositif d'ultrafiltration est de préférence un filtre en céramique ou une membrane à fibres creuses, et dans lequel le deuxième étage de filtre comprend éventuellement une pompe relais pour pousser le premier filtrat à travers le filtre.

7. Système selon la revendication 6, dans lequel le deuxième étage de filtre est configuré pour être régénéré par rinçage à l'eau propre dans une direction d'écoulement inversé ou d'écoulement croisé, de préférence dans lequel le deuxième étage de filtre est configuré pour être régénéré automatiquement une fois que le deuxième étage de filtre a atteint sa capacité de filtration.

8. Système selon l'une quelconque des revendications 1 à 7, dans lequel le matériau à base de graphène dans le troisième étage de filtre est un graphène, de préférence un graphène à peu de couches, et/ou un oxyde de graphène, de préférence un oxyde de graphène à peu de couches.

9. Système selon l'une quelconque des revendications 1 à 8, dans lequel l'au moins un filtre à base de graphène dans le troisième étage de filtre comprend :
une combinaison de poudre et de granulés de graphène à peu de couches comprenant un mélange de polyéther-sulfone, oxyde de graphène, et diméthylformamide (type A) ; ou
une poudre de graphène à peu de couches (type B) ; ou
une combinaison de chitosane, d'environ 0,1 % à environ 10 % en poids d'oxyde de graphène à peu de couches, de sulfate de sodium, et de chlorure ferrique hexahydraté (type C) ; ou
une poudre de graphène à peu de couches, un composite comprenant du chitosane, environ 0,1 % à environ 10 % en poids d'oxyde de graphène à peu de couches, du sulfate de sodium, et du chlorure ferrique hexahydraté, et du charbon activé granulaire (type M1).

10. Système selon l'une quelconque des revendications 9, dans lequel l'au moins un filtre à base de graphène est configuré pour être régénéré par rinçage avec une solution aqueuse diluée d'acide.

11. Système selon l'une quelconque des revendications 1 à 10, dans lequel le quatrième étage de filtre comprend une membrane de filtre ayant un diamètre d'ouverture de pore moyen d'environ 8 nm à environ 20 nm.

12. Système selon l'une quelconque des revendications 1 à 11, dans lequel le quatrième étage de filtre comprend un filtre à membrane à fibres creuses.

13. Système selon l'une quelconque des revendications 1 à 12, dans lequel chacun parmi le premier étage de filtre, le deuxième étage de filtre, le troisième étage de filtre et le quatrième étage de filtre est retirable et remplaçable.
